# DEMANDE DE BREVET EUROPEEN

(11) **EP 2 161 700 A1**
(43) Date de publication de la demande: **10.03.2010**
(21) Numéro de dépôt: 09290654.4
(22) Date de dépôt: 28.08.2009
(51) Int. Cl.: G08G 5/00, G08G 5/06, H04L 9/32

(54) **Procédé de communication d'une signature numérique pour certifier une transmission, systéme et aéronef asociés**

(30) Priorité: 03.09.2008 FR 0855918
(71) Demandeur: AIRBUS OPERATIONS, 31060 Toulouse (FR)
(72) Inventeur: Belmonte Roger, 31300 Toulouse (FR)
(74) Mandataire: Le Tourneau, Augustin

(57) **Abrégé**

La présente invention se rapporte à un procédé de communication destiné à garantir la reception de données numériques par au moins une entité distante, et un système associé, en particulier dans le cadre de transfert de données avec un aéronef: dans le domaine de la communication aéronautique par voie radio, où des fichiers constituant le dossier de vol d'un avion feraient partie des données à signer par ledit avion.
Selon l'invention, le procédé de communication comprend
- une étape de reception (4) de données numériques (2) par au moms une entité distante (3),
- une étape de signature numérique (6) desdites données reçues par ladite entité distante de sorte à générer une signature numerique (200) et
- une étape de transmission (17) de ladite signature numérique à une entité locale, ladite signature numérique (200) étant transmise avec au moms une information d'identification (210) desdites données reçues et signées (2), ladite information d'identification (210) étant de taille inférieure auxdites données reçues (2).

## Description

L'invention concerne un procédé de communication utilisé lors de la certification d'une transmission (ou réception) de données numériques à (ou par) au moins une entité distante, et concerne un système associé, en particulier dans le cadre de transfert de données avec un aéronef.

Les systèmes informatiques d'aujourd'hui mettent en oeuvre un grand nombre de transmissions et d'échanges de données numériques. On a ainsi pu mettre en place des protocoles de transmission prévoyant des messages d'acquittement de réception de données qui sont transmis à l'expéditeur des données.

Certains systèmes d'informations requièrent néanmoins un degré de garantie plus important que le classique signal d'acquittement, pour certifier que le destinataire a bien reçu précisément les données qui lui ont été envoyées.

C'est notamment le cas du domaine aéronautique dans lequel les documents physiques ont laissé place aux documents électroniques. Ces derniers sont généralement transmis depuis ou vers un aéronef en utilisant des moyens classiques de communication. Des exemples de système de transmission numérique prévu pour aéronef sont décrits dans les demandes de brevet WO 2007/012727 et EP 1 100 230.

A des fins probatoires, on souhaite disposer d'une indication efficace selon laquelle l'avion a précisément reçu les documents électroniques qui lui ont été transmis.

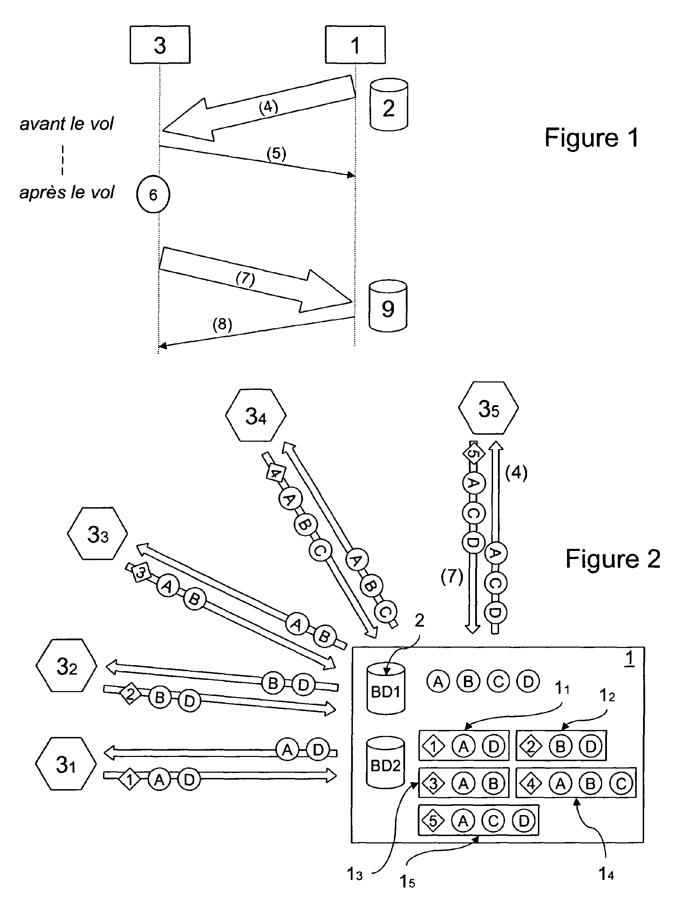

A cet effet, les réglementations aériennes ont imposé la signature numérique de certains documents sensibles lors de la préparation et de la clôture de chaque vol, ainsi que lors de certaines opérations de maintenance. La **figure 1** illustre les mécanismes actuels appliqués à ces documents, ici des dossiers de vol électroniques (EFF pour *"electronic flight folder"*) utilisés par les avions.

Des infrastructures centralisées au sol 1 d'une compagnie aérienne préparent des fichiers de vol EFF 2 pour l'ensemble des avions 3 de la flotte. Préalablement au vol, ces fichiers constituant le dossier de vol d'un avion sont transmis (4), par voie radio par exemple, à l'avion 3 qui en accuse (5) réception à l'aide d'un message classique d'acquittement. Après le vol, lorsque l'avion est au sol, celui-ci (3) signe (6) le dossier de vol EFF avant de le transmettre (7), toujours par voie radio, à l'infrastructure au sol 1. Cette dernière accuse réception (8) et stocke les fichiers signés 9 reçus parfois pendant plusieurs années. Ces fichiers signés (9) garantissent à long terme les conditions du vol qui a eu lieu.

La signature numérique est par exemple mise en oeuvre par l'utilisation d'une infrastructure à clés publiques (PKI ou *"Public Key Infrastructure"*) selon laquelle une empreinte numérique est déterminée à partir des données et est chiffrée à l'aide d'une première clé, typiquement privée. Puis la signature résultante est transmise avec les données initiales à un destinataire, qui peut authentifier l'expéditeur et l'intégrité des données à l'aide d'une deuxième clé, typiquement publique, associée à la clé privée. Pour ce faire, le destinataire décode, à l'aide de la clé publique, la signature reçue pour déterminer l'empreinte transmise et calcule en parallèle une autre empreinte à partir des données reçues avec la signature, puis compare les deux empreintes ainsi obtenues.

Or la transmission (7) de ces données signées s'ajoute aux nombreuses communications de maintenance faisant suite à un vol. Ces données initiales avec la signature associée peuvent ainsi entraîner un engorgement des moyens de communication avion-sol prévus pour la transmission qui disposent, en matière aéronautique pour les systèmes déjà en place, d'une bande passante limitée.

En effet, d'une part, les applications embarquées avion sont de plus en plus nombreuses et gourmandes en données numériques chargées avant le vol depuis la station au sol. Cette augmentation de données permet d'améliorer les procédures de maintenance, de disposer de données plus précises et mieux actualisées, ou encore de garantir un taux de disponibilité de l'avion (taux de *dispatch*) plus élevé, mais accroissent en revanche, d'autant, le volume de données à transmettre après le vol. A titre d'exemple, ces données numériques peuvent concerner des plans de vol, des bulletins météorologiques, des informations aéroportuaires, des paramétrages de l'avion, des listings de passagers, mais aussi de nouveaux logiciels importés dans l'avion, etc.

D'autre part, il est courant que plusieurs entités distantes souhaitent communiquer avec un site central en même temps, accroissant d'autant plus les communications simultanées. C'est le cas lorsque plusieurs avions fréquentent un même aéroport et transmettent simultanément leurs rapports de fin de vol avec la certification des données reçues avant le vol.

L'accumulation des transmissions post-vol peut donc conduire à une saturation des moyens de communication (de chaque avion ou de la station au sol) à chaque fin de vol.

L'invention vise à pallier ces inconvénients en proposant notamment une optimisation des échanges entre les entités distantes et le site central, encore appelé ci-après station au sol ou entité locale.

A cet effet, l'invention concerne notamment un procédé de communication comprenant une étape de réception de données numériques par au moins une entité distante, une étape de signature numérique desdites données reçues par ladite entité distante de sorte à générer une signature numérique et une étape de transmission de ladite signature numérique à une entité locale, procédé dans lequel on transmet ladite signature numérique avec au moins une information d'identification desdites données reçues et signées, ladite information d'identification étant de taille inférieure auxdites données reçues.

La présente invention s'applique à tout type de système d'informations, notamment dans la gestion de stocks, dans la gestion de la traçabilité (transmission de fichiers listant des produits à différentes entités de traitement), dans les transports, et en particulier dans le domaine des transports aériens.

Selon l'invention, on évite la transmission des données reçues qui sont signées en ne transmettant généralement qu'une faible quantité d'information (la signature dépourvue des données initialement reçues, et une référence aux données concernées par la signature) comparée aux données reçues par l'entité distante. Le trafic sur le réseau de transmission est ainsi réduit pour chaque entité distante, par exemple chaque avion d'une flotte. Les coûts de communication associés sont également réduits.

En conservant les mêmes ressources de communication, on peut ainsi augmenter le nombre d'échange de données, par exemple en accroissant le nombre d'avions pris en charge par une seule station au sol.

Grâce à l'invention et à l'information d'identification transmise, l'entité locale peut lier chaque signature reçue à une ou plusieurs copie(s) des données qu'elle détient en local. En liant ainsi la signature reçue avec ces données stockées en local, l'entité locale dispose d'éléments de certification pour l'envoi de fichiers électriques, éléments qui sont souhaités, par exemple dans le cadre de normes aéronautiques.

On constate également que la présente invention fournit un autre avantage en ce qu'au lieu de stocker les données signées pour chacune des entités distantes émettrices, l'entité locale ne va conserver qu'une seule version de données (non signées) communes à un ensemble d'entités distantes et chacune des signatures électroniques correspondantes transmises par les entités distantes. Cet avantage est d'autant plus important qu'il existe un grand nombre d'informations communes à plusieurs entités tels les avions (par exemple un bulletin météorologique). L'occupation de la mémoire dans l'entité locale est ainsi diminuée par rapport aux solutions connues.

Selon un mode de réalisation, l'étape de signature pour calculer une signature numérique comprend la détermination d'une empreinte desdites données reçues par ladite entité distante, puis le chiffrement de ladite empreinte à l'aide d'une clé de chiffrement. Une fonction de hachage, par exemple MD5 (*"Message Digest 5*") peut être utilisée pour le calcul de l'empreinte.

En particulier, on calcule, en outre, des données d'intégrité de ladite empreinte, ledit chiffrement étant effectué sur l'ensemble constitué de ladite empreinte et des données d'intégrité. On dote ainsi l'invention de mécanismes supplémentaires de détection de perte d'intégrité lors de la transmission de la signature. On ajoute ainsi une nouvelle empreinte "allégée", par exemple un message de hachage ou des données de redondance type CRC ("*Cyclic Redundancy Check*").

Par ailleurs, on prévoit que ledit chiffrement est également effectué sur ladite au moins une information d'identification. En variante, on envisage de juxtaposer, à ladite signature numérique, ladite au moins une information d'identification de sorte à former un fichier de données à transmettre à ladite entité locale. Dans le premier cas, les informations d'identification étant codées, on garantie une plus grande sécurité de transmission, notamment dans le cas d'utilisation de réseaux non sécurisés comme l'Internet. Dans le second cas, les informations d'identification sont transmises en clair. Il en résulte un traitement allégé par l'entité locale qui peut lire ces informations et associer la signature reçue aux données numériques correspondantes sans avoir à déchiffrer la signature reçue.

Dans un mode de réalisation, le procédé comprend, préalablement à ladite réception des données numériques par l'entité distante:
- une première étape de signature des données numériques par ladite entité locale, et
- une étape de transmission, par l'entité locale à destination de l'entité distante, des données et de la première signature ainsi générée,
ladite étape de signature par l'entité distante étant réalisée sur ladite première signature de sorte à former une double signature.

Dans ce mode de réalisation, on comprend que l'empreinte utilisée pour la signature par l'entité distance est la signature reçue des données.

Cette configuration permet d'intégrer un schéma de non-répudiation de l'émetteur des données numériques initiales puisque l'entité locale signe les données transmises. On peut, dans ce cas, prévoir que l'entité distante vérifie, à réception desdites données et de la première signature, cette dernière à l'aide d'une clé de chiffrement.

La double signature résultant de ce mode de réalisation de l'invention offre ainsi à la fois une garantie de l'authenticité des émetteurs et récepteurs, et de l'intégrité des données.

Selon une caractéristique de l'invention, une pluralité d'entités distantes reçoit des données numériques, et chaque entité distante transmet une dite signature numérique des données reçues accompagnée d'une dite information d'identification des données reçues, et
ladite entité locale stocke, dans une base de données, l'ensemble des signatures de la pluralité d'entités distantes avec lesdites informations d'identification, et stocke une unique copie de chaque donnée numérique de telle sorte que l'entité locale peut lier une signature reçue avec une copie détenue localement.

Comme déjà introduit précédemment, l'invention permet ainsi de diminuer la mémoire utilisée en local, en ne stockant qu'une seule version des données numériques. Cette unique version permet, par la suite, de vérifier la signature reçue.

De manière générale, en matière aéronautique, l'entité locale est unique et centralisée dans une base centrale ("*mainbase*") de la compagnie aérienne. Chaque aéroport a alors accès à celle-ci. Il en résulte aucune difficulté d'accès aux copies des données transmises initialement depuis n'importe quel aéroport d'atterrissage.

On peut cependant envisager des systèmes d'information distribués où chaque aéroport héberge lesdites entités locales indépendantes. L'entité locale à l'atterrissage d'un avion ne correspond alors pas à l'aéroport de décollage.

Selon une caractéristique de l'invention, à réception d'une signature numérique accompagnée d'une information d'identification, l'entité locale émet, à destination de l'entité distante émettrice, une demande des données numériques identifiées dans ladite information d'identification et dont aucune copie n'est stockée dans ladite entité locale.

Grâce aux dispositions selon l'invention, des mécanismes sont prévus pour récupérer les données référencées avec la signature transmise par l'entité distante mais qui ne sont pas encore connues de l'entité locale. D'autres avions pourront ensuite identifier à nouveau ces données récupérées avec leurs signatures.

Lors d'un vol, les pilotes peuvent être amenés à modifier des éléments du dossier de vol électronique. Dans ce cas, on prévoit que le procédé comprend, au niveau de ladite entité distante, une étape de modification desdites données numériques reçues, une étape de signature de données de modification, et la transmission, avec ladite signature des données numériques, desdites données de modification signées. Cette disposition permet de transmettre et conserver, à moindre coût, les éventuelles modifications ainsi apportées. En effet, on évite ainsi de transmettre l'ensemble des données initiales intégrant les modifications.

Dans un mode de réalisation, le procédé comprend, au niveau de l'entité locale:
- une étape de réception de ladite signature numérique et de l'au moins une information d'identification,
- une étape de recherche locale, à l'aide de l'information d'identification, d'une copie locale desdites données numériques identifiées,
- une étape de vérification de ladite signature numérique à l'aide de la copie trouvée.

Ces étapes mènent à la vérification de la signature et conduisent ainsi à la validation de l'envoi des données à l'entité distante. Elles n'entraînent pas de surcoût important au regard des gains de transmission obtenus par la présente invention. En effet, les techniques actuelles de recherche locale sont désormais performantes et les mémoires sont d'accès rapide.

Grâce à l'invention, ce procédé de "validation" permet, en outre, de garantir l'intégrité des données transmises initialement depuis l'entité locale vers l'entité distante, puisque la vérification est menée sur les données que l'entité locale détient et non celles reçues de l'entité distante comme dans l'état de l'art.

Corrélativement, l'invention concerne un système de communication comprenant des moyens de réception de données numériques sur un réseau de communication, des moyens de signature numérique desdites données reçues agencés pour générer une signature numérique et des moyens de transmission de ladite signature numérique sur ledit réseau de communication à destination d'une entité locale, le système étant agencé pour transmettre ladite signature numérique avec au moins une information d'identification desdites données reçues et signées, ladite information d'identification étant de taille inférieure auxdites données reçues.

Les mêmes avantages que ceux du procédé de communication sont obtenus au travers de ce système.

De façon optionnelle, le système peut comprendre des moyens se rapportant aux caractéristiques du procédé de communication ci-dessus.

L'invention vise également un aéronef comprenant un système de communication tel que présenté ci-dessus.

De façon optionnelle, l'aéronef peut comprendre des moyens se rapportant aux caractéristiques de système présentées ci-dessus.

Egalement, l'invention a trait à un système aéroportuaire comprenant une pluralité d'aéronefs selon la revendication précédente et une station au sol, ladite station au sol étant apte à stocker une copie des données numériques transmises auxdits aéronefs et comprenant:
- des moyens de réception d'une signature numérique et d'au moins une information d'identification émises par un desdits aéronefs,
- des moyens de recherche locale, à l'aide de l'information d'identification, d'une copie des données numériques transmises audit aéronef,
- des moyens de vérification, à l'aide de la copie trouvée, de ladite signature numérique reçue de l'aéronef.

Un tel système présente les mêmes avantages que le procédé de "validation" présenté ci-dessus et peut comprendre, de façon optionnelle, des moyens se rapportant aux caractéristiques du procédé ci-dessus.

Dans un environnement aéronautique, en particulier celui lié au dossier de vol EFF, la présente invention présente de nombreux avantages.
1/ On réduit notamment les coûts de communication car, d'une part, la diminution du volume des données à échanger induite par la présente invention réduit les coûts de communication, et d'autre part, les infrastructures de communication actuelles, qui sont certes limitées en terme de performances, peuvent suffire lorsqu'elles étaient, sans l'invention, proches de la saturation.
2/ Les performances à la fin d'un vol sont également améliorées pour l'EFF: la transmission des informations (signature) est réalisée beaucoup plus rapidement et une réactivité accrue est obtenue au regard de la corruption des données (délai de détection raccourci, retransmission des données beaucoup moins pénalisante).
3/ On obtient aussi une réduction des volumes de communication après le vol. C'est, en effet, lors de cette période après vol que le plus grand nombre d'informations est envoyée depuis l'avion vers une station au sol. Ainsi, l'invention permet de rationaliser certaines communications à ce moment critique d'après vol.
4/ L'invention permet également d'éviter d'avoir recours à de nouveaux moyens de communication « avion » destinés à couvrir certains scénarios à fort débit de données. L'EFF a, certes, été conçu comme une application qui utilise les moyens de communication de nouvelle génération, tels Gatelink, Satcom SBB (pour "*SATellite COMmunication Swift BroadBand*"), mais beaucoup de compagnies aériennes n'ont cependant pas les infrastructures adaptées, généralement pour des raisons économiques (paiement d'abonnements aux opérateurs). L'invention permet en revanche d'utiliser les moyens de communication classiques, type ACARS/ATN (pour "*Aircraft Communications Addressing and Reporting System*/*Aeronautical Telecommunication Network*"), beaucoup moins performantes et peu adaptés à transmettre des gros fichiers (maximum 100 kilo-octets dans le meilleur des cas). Ainsi, on peut transmettre la signature des documents par ces moyens peu performants de type ACARS.
5/ Alors que les moyens de communication récents et plus performants (Gatelink, Satcom SBB, etc.) n'ont pas de couverture mondiale, il est possible par l'utilisation de moyens de communication classiques, certes moins performants tels ACARS, d'offrir une couverture quasi-mondiale pour la transmission des signatures à la station au sol.
6/ Enfin, une rationalisation du stockage des fichiers signées dans la station au sol est obtenue puis que l'on ne stocke, à côté des différentes signatures reçues, qu'une seule fois des données communes en différents avions.

D'autres particularités et avantages de l'invention apparaîtront encore dans la description ci-après, illustrée par les dessins ci-joints, dans lesquels :
- la **figure 1** illustre les échanges d'une communication entre une entité distante et une station locale, selon l'art antérieur;
- la **figure 2** illustre les données échangées lors de la communication de la **figure 1****,** et l'état des informations stockées par la station locale;
- la **figure 3** illustre, par les échanges d'une communication, un premier mode de réalisation de la présente invention;
- la **figure 4** illustre les données échangées lors de la communication de la **figure 3**, et l'état des informations stockées par la station locale;
- la **figure 5** représente un exemple de réalisation aéronautique du système selon l'invention, centré sur la station locale de la **figure 3****;**
- la **figure 6** représente un exemple de réalisation aéronautique du système selon l'invention, centré sur l'entité distante de la **figure 3****;**
- les **figures 7** à **9** illustrent les différentes étapes mises en oeuvre par l'invention dans l'utilisation d'un fichier électronique de vol;
- la **figure 10** représente l'évolution d'une signature numérique selon le premier mode de réalisation de l'invention de la **figure 3****;**
- la **figure 11** illustre, par les échanges d'une communication, un deuxième mode de réalisation de la présente invention; et
- la **figure 12** représente l'évolution d'une signature numérique selon le deuxième mode de réalisation de l'invention de la **figure 11****.**

L'invention est illustrée ci-après au travers d'exemples tirés du domaine aéronautique, mais concerne d'une façon générale tout type de systèmes d'informations. En outre, on fait généralement référence à un seul avion 3. Il faut dans ce cas envisagé que des communications parallèles sont réalisés avec d'autres avions.

La **figure 1** introduite précédemment illustre les traitements classiques d'échanges de données entre une station au sol 1 et des avions 3. La **figure 2** illustre le cas d'échanges avec cinq avions 3₁ à 3₅. Les échanges de données (4) et (7) sont représentés par les flèches entre la station au sol 1 et les avions 3ᵢ. Sur ces flèches, on observe les données envoyées, par exemple les fichiers "B" et "D" à l'avion 3₂ pour la transmission 4, et les fichiers signés "B", "D" avec la signature "2" par l'avion 3₂ pour la transmission retour 7. Chacun des avions reçoit donc des fichiers ("A", "B", "C", "D") constituant par exemple leur dossier de vol EFF, puis, à l'issue du vol, renvoie ces fichiers signés.

La station au sol 1, ici une station centralisée pour la compagnie aérienne, stocke, dans la première base de données BD1, l'ensemble des fichiers 2 transmis aux avions 3ᵢ, ici les fichiers "A", "B", "C" et "D", et dans la seconde base de données BD2, les fichiers signés 1ᵢ (comprenant les fichiers reçus plus la signature réalisée par l'avion) par chacun des avions. On observe le stockage de plusieurs versions d'un même fichier; dans notre exemple, le fichier "A" est stocké une fois dans la base de données BD1 et quatre fois dans la base BD2.

Cette station au sol centralisée 1 est accessible depuis l'ensemble des aéroports, notamment l'aéroport de décollage et celui d'atterrissage.

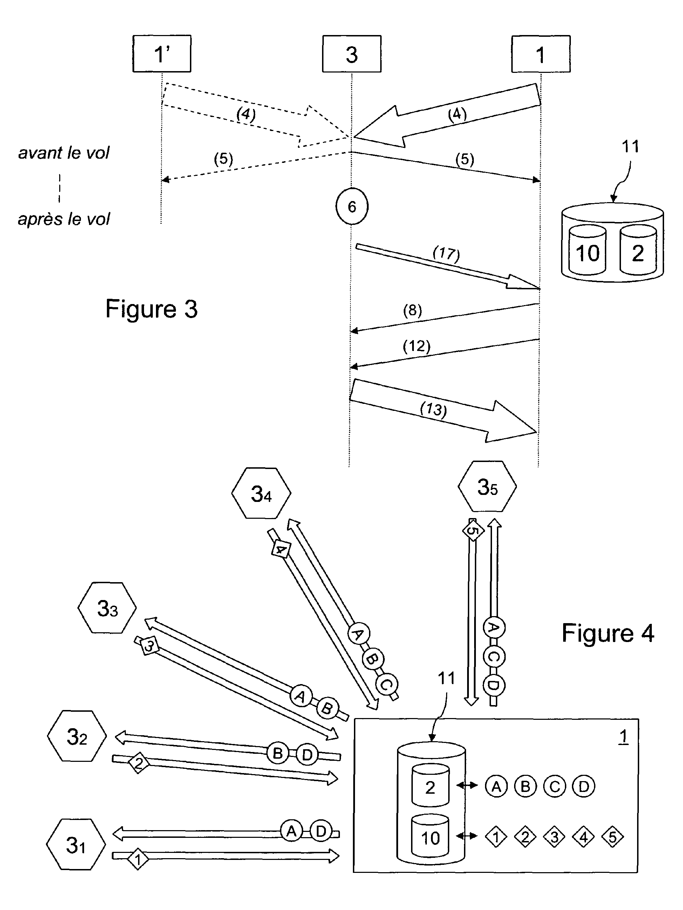

La **figure 3** montre le schéma général d'échanges de données selon l'invention. La première phase d'échange (références 1 à 5) avant le vol est similaire à celle de la **figure 1****.**

En variante cependant, les données transmises lors de l'étape 4 peuvent provenir d'une autre source 1' que la station au sol 1 visée par la suite des échanges (voir les flèches en traits discontinus). C'est le cas notamment lorsque certaines informations doivent être acquises de manière indépendante sans passer par la station centralisée 1 de la compagnie aérienne. Par exemple, lorsqu'il y a des problèmes de communication entre les infrastructures de l'aéroport et celles de la compagnie aérienne.

Une autre source 1' peut être un serveur de secours mis à jour périodiquement à partir de la station centralisée 1. Des réseaux de communication de la compagnie aérienne permettent de relier ces deux sources pour réaliser une copie des fichiers EFF 2 entre elles.

Après le vol, l'avion 3 signe également les fichiers du dossier de vol. Contrairement à l'exemple de la **figure 1**, l'avion 3 transmet (17) alors, à la station au sol 1, uniquement un identificateur des fichiers signés, par exemple un numéro unique de chaque fichier signé, ainsi que les signatures de ces fichiers. La station au sol 1 stocke ces informations 10 (identificateurs et signatures) dans la même base de données 11 que les fichiers EFF 2 transmis initialement, et acquitte les données reçues (flèche 8).

Comme illustré par la largeur de la flèche 17, les identificateurs et les signatures des fichiers représentent une quantité de données bien inférieure aux fichiers eux-mêmes qui sont transmis selon l'état de la technique (flèche 7 de la **figure 1**).

Dans le cas où la station sol 1 ne possède pas les fichiers 2 référencés par les identificateurs 10 reçus ou ne peut les obtenir directement de la source 1', elle demande (requête 12) ces fichiers auprès de l'avion 3 qui les lui envoie (13) de façon classique lors d'un échange ultérieur à celui (17) de la signature.

Comme illustré sur la **figure 4****,** la station au sol 1 ne stocke dès lors plus que d'une seule version de chacun des fichiers 2 de données ("A", "B", "C", "D") qui ont été transmis aux avions 3ᵢ. Grâce aux identificateurs 10 associés aux signatures, la station au sol 1 peut retrouver les fichiers EFF 2 initiaux qui correspondent aux signatures reçues.

Les données 2 et informations reçues 10 constituent un récapitulatif des conditions du vol auquel elles se rapportent, et sont conservées, à des fins probatoires par la station au sol 1, par exemple pour des enquêtes ultérieures.

L'exploitation de ces données et informations requiert alors la lecture des identificateurs 10 reçus, la récupération des fichiers 2 ainsi référencés et la vérification de la signature 10 au regard de ces fichiers. On décrit plus en détail ces étapes par la suite.

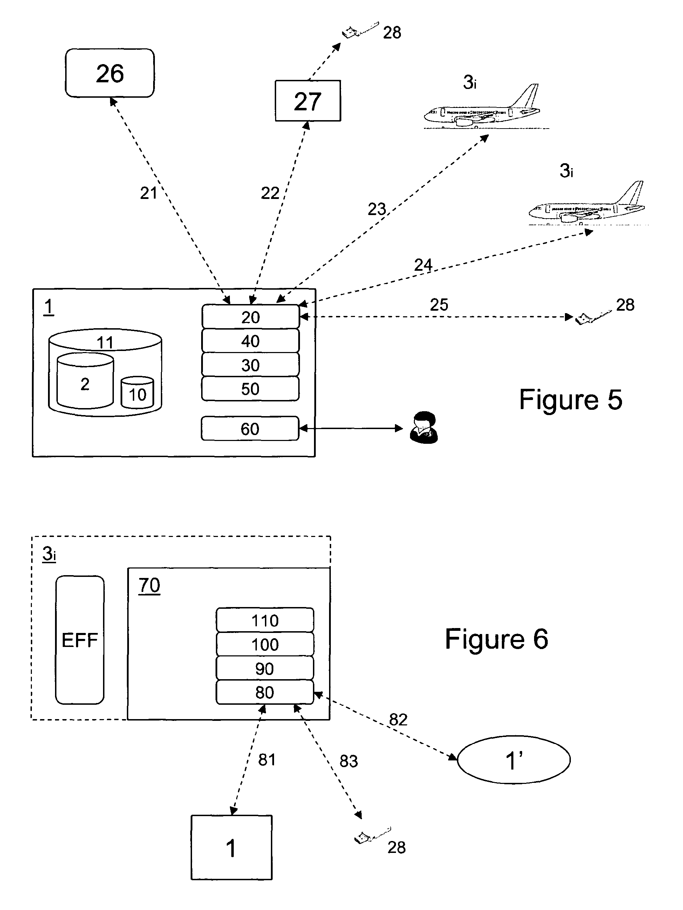

Sur la **figure 5****,** on a représenté plus en détail une entité locale selon l'invention, ici la station au sol 1, mise en oeuvre sous forme d'un ordinateur incluant un microprocesseur et des moyens de mémoire. On y retrouve la base de données 11 comprenant les fichiers EFF 2 et les informations reçues 10 (identificateurs et signatures).

La base de données 11 est mise en oeuvre dans un mémoire de stockage de la station au sol et peut stocker toute sorte de donnée (par exemple des fichiers dits *pdf*, fichiers dans un format particulier, etc.).

Elle dispose également de tables stockant les signatures 10 reçues et crée des liens entre ces signatures et les fichiers 2 stockés. Elle mémorise également à cette occasion, des clés de chiffrement utilisées pour les signatures, généralement la clé publique de l'avion émetteur, comme décrit ci-après.

La station au sol 1 comprend en outre, une interface de communication 20, des moyens logiciels de signature numérique 30 et de vérification de signature 40, des moyens logiciels 50 de gestion de la base de données 11 et une interface utilisateur 60, type clavier et écran, permettant à un utilisateur de piloter les moyens logiciels et d'accéder à la base de données 11.

L'interface 20 permet notamment la communication avec des réseaux informatiques, type Ethernet, vers une base centrale 26 de gestion (réseau 21), vers une salle de pré-embarquement 27 pour les pilotes d'avion (réseau 22) et vers les avions 3ᵢ éventuellement en vol ou au sol (réseaux 23 et 24, par exemple SATCOM ou Gatelink) ou avec des moyens amovibles 28 de stockage (lien 25) de type clé USB. En variante, des réseaux ACARS de type VHF ou VDL2 peuvent être utilisés pour communiquer avec les avions (liens 23 et 24) de sorte à assurer une couverture géographique plus importante.

Les moyens logiciels 30 et 40 mettent en oeuvre une gestion parallèle de clés de chiffrement, notamment au regard de listes de révocation et de mise à jour de certificats.

L'interface 50 permet l'accès à la base de données 11, et assure ainsi la génération de nouveaux identifiants uniques pour chaque nouvelle donnée ou nouveau fichier, par exemple un fichier EFF 2, stockée dans la base de données. Par exemple, on peut utiliser la concaténation d'un identifiant unique de la station au sol 1 avec un identifiant unique de données dans la station. Des fonctionnalités de recherche de fichiers sont également prévues pour permettre la sélection des données à transmettre aux avions.

Au travers de l'interface 60, l'utilisateur peut commander diverses opérations ponctuelles telles que:
- le stockage de données à envoyer;
- la consultation des données disponibles en base 11 qui peuvent être envoyées;
- l'envoi de données vers un ou plusieurs utilisateurs, ici les avions 3*i*;
- l'administration de la base de données 11;
- la vérification des signatures reçues grâce au logiciel 40, comme décrit ci-après.

Ces moyens logiciels et interfaces peuvent être mis en oeuvre sous la forme d'une bibliothèque informatique, d'un plugiciel (*"plug-in"*) ou d'une API, qui s'interfacent avec les applications et systèmes déjà existants.

On a représenté, sur la **figure 6****,** l'entité distante mise en oeuvre pour l'invention, ici les avions 3ᵢ.

L'équipement 70 d'échange de données embarqué dans les avions 3ᵢ est également mis en oeuvre par des moyens informatiques de type microprocesseur et mémoires associées.

Cet équipement 70 comprend une interface de communication 80 similaire à l'interface 20 de la station au sol 1, des moyens logiciels 90 de vérification de signature numérique, des moyens logiciels 100 de signature numérique et une interface utilisateur 110, notamment avec le pilote de l'avion 3ᵢ.

L'interface 80 est notamment prévue pour communiquer avec la station au sol 1 comme évoqué précédemment (réseau 81 identique aux liens 23 et/ou 24 précédents), avec une autre source 1' de données ou de fichiers EFF (réseau 82) et avec des moyens amovibles physiques de stockage type clé USB, disque dur externe, ordinateur portable (lien 83 similaire au lien 25 précédemment introduit).

L'interface 110 permet au pilote de gérer le dossier de vol EFF chargé, en particulier d'effectuer manuellement, en fin de vol, une signature de celui-ci avant transmission à la station sol 1.

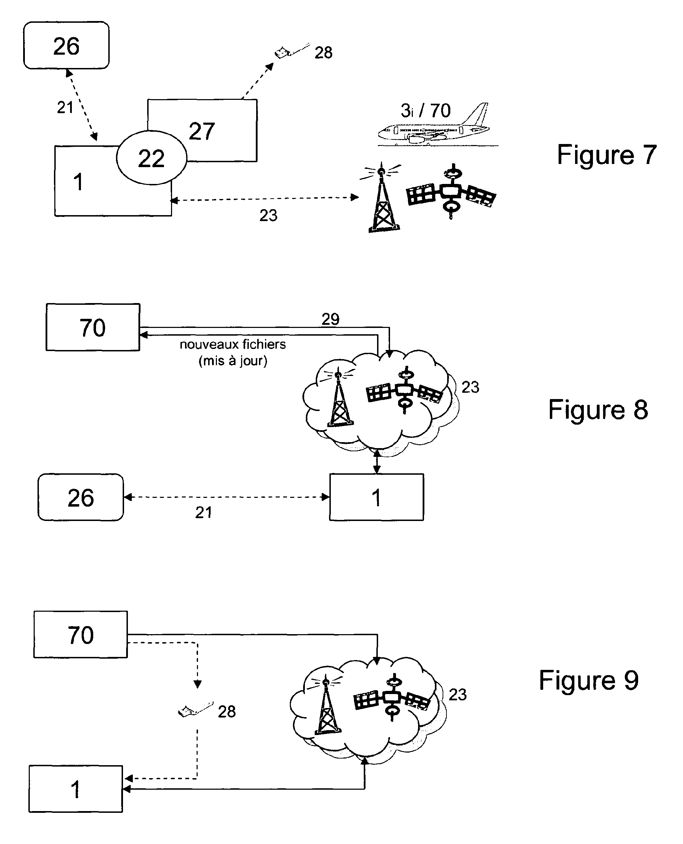

La **figure 7** illustre la préparation du fichier de vol EFF 2 avant le vol. La base centrale 26 de régulation de la compagnie aérienne prépare le fichier de vol EFF 2 en rentrant les données dans la base de données 11 à l'aide d'outils appropriés et de documentations techniques à disposition. Le fichier ainsi constitué peut être envoyé directement aux avions 3ᵢ.

Généralement, les pilotes interviennent eux-mêmes sur le dossier de vol 2, à l'aide d'ordinateurs dans la salle de briefing 27 et interfacés avec la base de données 11, afin de le compléter, par exemple avec un plan de vol précis. Les compléments sont stockés dans la base de données 11 qui, on le rappelle, affecte un identifiant unique à chaque donnée ou ensemble de données (un fichier par exemple).

Le pilote peut alors commander l'envoi des fichiers EFF 2 concernant son vol à son avion 3ᵢ au travers du réseau 23, les fichiers étant accompagnés de leurs identifiants uniques affectés.

En variante, le transfert des fichiers EFF 2 peut être réalisé manuellement par le pilote qui récupère ceux-ci sur un média amovible 28 à partir de l'ordinateur dans la salle de briefing, et qui l'emporte lui-même dans l'avion pour y charger les fichiers 2.

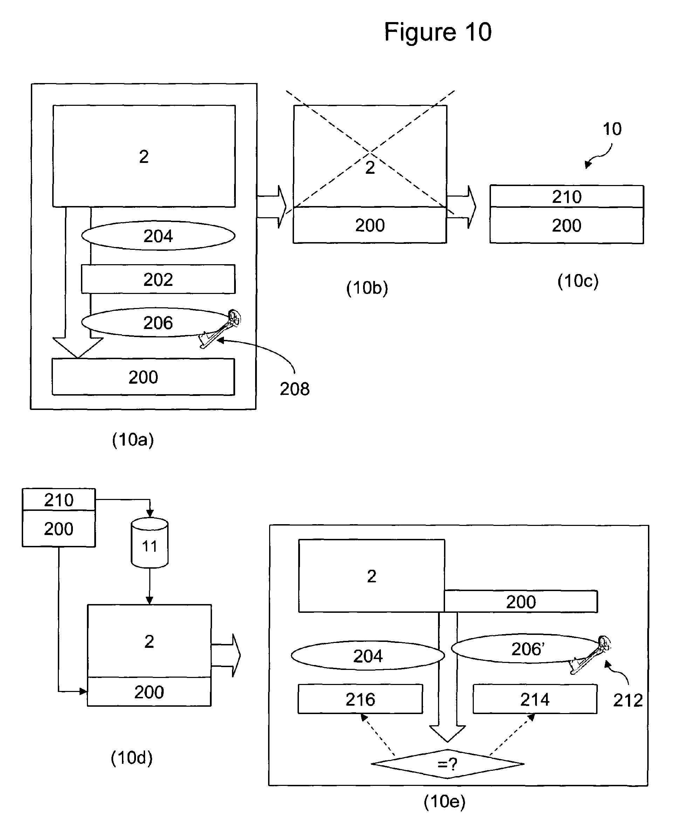

On décrira plus en détail ci-après en référence aux **figures 10** à **12** le transfert des données vers l'avion.

La **figure 8** illustre une phase optionnelle de mise à jour des fichiers embarqués dans l'avion 3ᵢ. Cette opération peut être réalisée alors même que l'avion est au sol ou en vol.

Deux situations principales sont rencontrées.

D'une part, la base centrale de régulation 26 met jour un fichier électronique 2 dans la base de données. Un nouvel identifiant peut alors être attribué à la version mise à jour du fichier. Ce dernier est alors envoyé automatiquement aux avions 3ᵢ.

D'autre part, le pilote peut, à son initiative, demander (29) des mises à jour ou consulter les fichiers disponibles dans la base de données 11 de la station 1 ou d'une autre station 1' et les copier pour les utiliser.

La **figure 9** illustre les étapes de transmission après le vol, c'est-à-dire lorsque la station au sol 1 récupère les signatures 10 des dossiers de vol 2. Dans ce cas, l'avion 3ᵢ est au sol. Comme déjà évoqué précédemment, les signatures et identifiants des données signées sont envoyées généralement par le biais de la liaison de communication 23 classique type Gatelink ou SATCOM. En variante, le pilote peut récupérer ces informations 10 de signature et identifiant sur le media amovible 28 et les porter lui-même jusqu'à l'ordinateur de traitement de la station sol 1.

On décrit maintenant plus en détail les transmissions de données avion-sol et les signatures de données, en référence aux **figures 10** à **12****.**

La **figure 10** illustre un mode de réalisation de transmission et signature simple. Dans ce cas, les données du fichier EFF 2 ont été transmises lors de l'étape 4 (voir **figures 1** et **3**), reçues par l'interface 80 et stockées dans une mémoire (non représentée) de l'avion 3ᵢ.

En fin de vol, l'application 100 embarquée dans l'avion 3ᵢ calcule (étape 10a) une signature numérique 200 de ces données 2. Ce calcul de signature numérique comprend classiquement le calcul d'une empreinte 202 par une fonction de type hachage 204, par exemple SHA-1 ou 2 (*"Secure Hash Algorithm 1 or 2*") ou MD5 (*"Message-Digest algorithm 5"*)*,* puis le chiffrement de cette empreinte par une algorithme de chiffrement 206 utilisant une clé de chiffrement 208.

On note que la fonction utilisée pour créer des empreintes peut dépendre du type d'information ou données à transmettre. Par exemple, les empreintes des fichiers de texte sont généralement petites tout en garantissant une intégrité des données, alors que l'empreinte d'une image est généralement beaucoup plus grosse pour garantir la même intégrité.

De façon préférentielle, on choisit une infrastructure à clés publiques, connue sous la terminologie PKI (*"Public Key Infrastructure*"), où la clé 208 est une clé privée. En général, cette clé privée 208 est personnelle au pilote. Il peut néanmoins être envisagé que cette clé 208 soit liée au système, ici l'avion 3ᵢ.

Dans un seconde étape 10b, le système 70 embarqué dans l'avion retire les données initiales 2 des données signées résultant de l'étape 10a. On dispose ainsi uniquement de la signature 200.

A l'étape 10c qui suit, le système 70 ajoute à cette signature 200 les identifiants uniques 210 des données 2. Ces identifiants sont soit inclus dans les données 2 et récupérés en conséquence, soit transmis en même temps que les données 2 par la station au sol 1.

L'avion 3i transmet alors l'ensemble formé de la signature 200 et des identifiants 210 à la station sol 1 comme expliqué précédemment (étape 17 ci-dessus).

A réception de ces données, la station sol 1 récupère dans la base de données 11, grâce aux identifiants 210, les données EFF 2 correspondantes (étape 10d). La station sol 1 vérifie alors, à l'étape 10e et à l'aide du logiciel de vérification 40, que la signature reçue 200 correspond aux données initialement transmises (étape 4).

Pour ce faire, le logiciel 40 décode la signature 200 reçue avec une clé de chiffrement 212, généralement la clé publique associée à la clé privée 208, de sorte à obtenir une empreinte 214. En parallèle, on calcule une deuxième empreinte 216 à partir des données initiales 2 récupérées à l'étape 10d et d'une fonction de hachage appropriée, c'est-à-dire identique à celle 204 utilisée dans l'avion. La vérification se termine par la comparaison des deux empreintes 214 et 216 qui doivent être égales pour valider que le pilote et l'avion 3ᵢ ont bien utilisé les données EFF 2 initialement transmises et stockées localement dans la base de données 11 de la station sol 1.

En cas de différence entre les deux empreintes, la station sol 1 peut demander à l'avion 3 de lui renvoyer la signature 200 et les identifiants 210. La station sol 1 détecte ainsi d'éventuelles pertes d'intégrité des données 200 et 210 transmises.

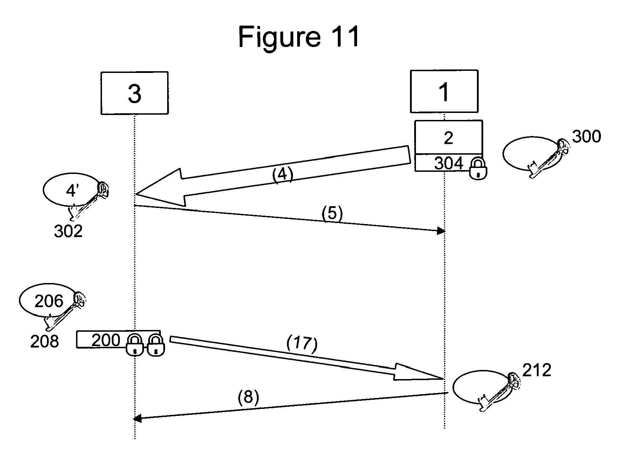

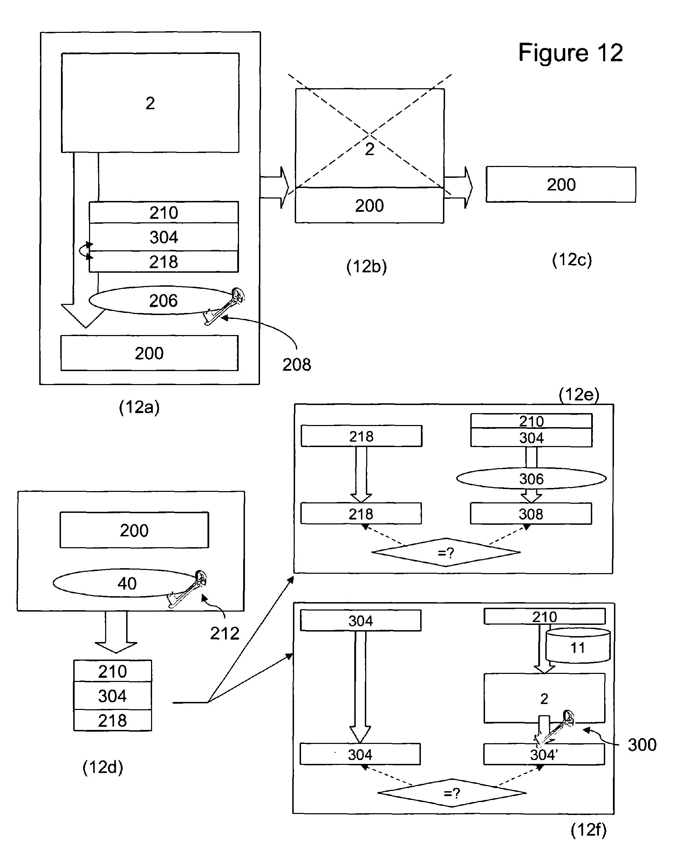

Les **figures 11** et **12** décrivent une mode de réalisation plus complexe des échanges entre l'avion 3ᵢ et la station sol 1.

En référence à la **figure 11**, on prévoit que les données EFF 2 sont initialement signées par la station sol 1 au moyen du logiciel 30. Des mécanismes de chiffrement type PKI sont ici aussi utilisés avec une clé privée 300 et une clé publique 302. Les données 2 et la signature 304 générée à l'aide de la clé 300 sont alors envoyées à l'avion 3ᵢ lors de l'étape 4.

Le logiciel 90 embarqué dans l'avion 3ᵢ conduit alors une étape 4' au cours de laquelle, à réception des données signées 2 + 304, il vérifie la signature 304 avec la clé publique 302 de la station sol 1. Cette vérification joue un double rôle: vérification de l'intégrité des données transmises et garantie de l'authenticité de l'émetteur. Cette garantie s'inscrit notamment dans un processus de non répudiation des échanges entre la station au sol 1 et les avions 3ᵢ.

En cas de vérification négative, l'avion 3ᵢ peut solliciter l'envoi à nouveau des données signées 2 et 304 par la station sol 1.

Le vol n'a ainsi lieu qu'une fois que l'intégrité des données 2 et l'authenticité de l'émetteur ont été valablement vérifiées.

Après le vol, le système embarqué 70 prépare la signature des données, à l'aide de la clé de chiffrement 208, avant transmission à la station sol 1.

La **figure 12** illustre cette signature.

Lors d'une première étape 12a, le logiciel 100 calcule la signature. On utilise tout d'abord, comme empreinte 202, la signature 304 reçue. On évite ainsi de calculer à nouveau cette empreinte 202 par la fonction de hachage 204.

On concatène, à cette empreinte 304, les identifiants 210 des données initiales 2. On calcule ensuite une "sous"-empreinte 218 de l'ensemble formé par les données 304 et 210. Une telle empreinte peut être calculée par une fonction de hachage, par exemple de type redondance comme le mécanisme de contrôle de redondance cyclique ou CRC ("*Cyclic Redundancy Check*").

On encode ensuite l'ensemble formé de l'empreinte 304, des identifiants 210 et de la sous-empreinte 218 à l'aide de la clé de chiffrement 208 comme expliqué ci-dessus en lien avec la **figure 10****.** On obtient ainsi les données 2 signées, c'est-à-dire avec la signature 200. Cette dernière comprend, entre autres, l'empreinte des données 2 doublement signée par les clés privées 208 et 300. On garantie ainsi un mécanisme de non-répudiation des échanges des données 2, c'est-à-dire l'authenticité des deux parties aux échanges.

De façon similaire à l'étape 10b, on retire, lors de l'étape 12b, les données 2 des données signées. On obtient la signature 200 seule que l'on transmet à la station sol 1 (étape 17).

A réception de la signature 200 par la station sol 1, le vérificateur de signature 40 décode, tout d'abord (étape 12d) à l'aide de la clé publique 212, la signature 200 de sorte à récupérer les identifiants 210, l'empreinte 304 et la sous-empreinte 218.

Dans une étape 12e, la station sol 1 vérifie l'intégrité des données reçues à l'aide de la sous-empreinte 218.

Une fonction 306 de calcul d'une empreinte type CRC similaire à celle utilisée dans l'avion 3 est ici appliquée sur les identifiants 210 et l'empreinte 304 de sorte à fournir une seconde sous-empreinte 308. On compare ensuite les deux sous-empreintes 218 et 308. L'intégrité des données est validée si les deux empreintes sont égales.

En cas de non-intégrité, la station au sol 1 peut solliciter l'avion 3 pour qu'il lui renvoie la signature numérique 200.

Une fois l'intégrité des données vérifiée, la station sol 1 vérifie la signature 304 des données lors de l'étape 12f.

Pour ce faire, elle récupère, à l'aide des identifiants 210 reçus et décodés, les données 2 dans la base de données 11. De façon similaire à l'opération initiale de signature (avant la transmission 4), la station au sol 1 recalcule une empreinte des données EFF 2 et la chiffre à l'adire de la clé 300. Elle obtient ainsi l'empreinte 304' similaire à celle qui a été transmise lors de l'étape 4.

Elle compare ensuite cette deuxième empreinte 304' à celle reçue 304. Les données 2 et donc le dossier de vol EFF sont bien signées si ces deux empreintes sont égales.

L'utilisation de l'infrastructure PKI dans la mise en oeuvre de l'invention présente l'avantage de simplifier l'administration des clés (qui ne sont pas générées à chaque session de communication) et la gestion des sessions de communication au cours desquelles les données doublement signées sont généralement renvoyées beaucoup plus tard que l'émission première (une attente d'au moins la durée du vol).

Les applications de vérification de signature (40) sur la station au sol 1 sont adaptées pour fonctionner alors même que les fichiers signées par l'avion sont reçus beaucoup plus tard que la transmission de ces fichiers aux avions (quelques heures après, en fin de vol).

On observe que les exemples des **figures 10** et **12** correspondent à deux configurations assez éloignées l'une de l'autre. Néanmoins, il est envisagé de combiner, de façon indépendante, tout ou partie des mécanismes présentés ci-dessus, notamment:
- la signature ou non des données 2 par la clé 300 au niveau de la station sol 1. L'empreinte 202 est alors soit une empreinte calculée directement à partir des données 2 (si pas de signature par la clé 300) soit la signature 304 reçue. Lors de l'étape 12f, la station sol 1 calcule l'empreinte des données 2 à l'aide d'une fonction similaire à celle utilisée dans l'avion (si pas de signature par la clé 300) ou recalcule la signature des données 2 par la clé 300 comme expliqué ci-dessus (dans l'autre cas);
- attacher ou non les identifiants 210 à l'empreinte 202 de sorte à les intégrer au message chiffré par la clé 208. Cette intégration permet notamment de protéger la transmission de ces informations contre l'insécurité de certains réseaux de communication;
- générer ou non une "sous"-empreinte 218 portant sur l'empreinte 202 et éventuellement les identifiants 210. Comme évoqué ci-dessus, cette sous-empreinte permet de simplifier (diminution des ressources utilisées et du temps de calcul) le contrôle de l'intégrité des données puisqu'on peut dès lors se passer de recalculer les empreintes des données initiales 2 volumineuses. Cette "sous"-empreinte 218 peut ne porter que sur l'empreinte 202 ou la signature 304 reçue, sans y inclure les identifiants 210 même si ces derniers sont conservés à l'intérieur des données chiffrées.

Le principal avantage conféré par l'invention repose sur le fait que la signature 10 (empreinte) des données est beaucoup plus petite (en bits) que les données signées elles-mêmes. Pour ce faire, on veille à choisir des mécanismes de signature présentant un gain important en volume de données selon le type de données à traiter ou de la sécurité souhaitée (en général, pour les mêmes algorithmes, une empreinte plus longue est moins susceptible aux collisions).

Par exemple, la norme précitée MD5, utilisée pour créer des empreintes de signatures sur Internet, permet de réaliser des empreintes de 128 bits à partir de n'importe quelle taille de fichier 2.

Pour illustrer ce gain en données, on considère la signature de 10 fichiers d'environ 500 ko (kilo-octets) à l'aide du mécanisme MD5. Le tableau ci-dessous fournit une indication du volume de données alors transmis lors des étapes 7 (art antérieur - **figure 1**) et 17 (selon l'invention - **figures 3** et **11**).

| | Volume transmis lors de l'étape 7 (état de l'art) | Volume transmis lors de l'étape 17 (avec l'invention) |
|---|---|---|
| Signature d'un fichier | environ 500 ko | < 0.1 ko |
| de 500 ko | | |
| Signature de dix fichiers | environ 5000 ko | < 1 ko |
| de 500 ko | | |

Selon les données à signer (fichiers plus ou moins courts) et les mécanismes de signature (redondance, sécurité, longueur des empreintes, etc.), il a été observé une division du volume de données transmises comprise entre 2 et 10 000.

Les exemples qui précèdent ne sont que des modes de réalisation de l'invention qui ne s'y limite pas.

En particulier, au lieu d'utiliser les moyens de communication à distance (réseaux 23, 24 et 81), on peut effectuer les transfert de données entre l'avion 3 et la station au sol 1 à l'aide de médias amovibles 28, type clé USB branchée directement soit à l'interface 20 soit à l'interface 80 selon le cas.

Notamment, on peut combiner l'utilisation de la clé USB 28 avec les moyens de communication à distance pour choisir la clé USB 28 uniquement lorsque ces moyens de communication ne sont pas disponibles (réseau occupé, encombré, etc.)

Egalement, il est courant que les pilotes à bord de l'avion 3 soient amenés à modifier leur dossier de vol et donc les données 2. Dans ce cas, il convient d'en avertir la station au sol 1 afin que cette dernière génère un nouvel identifiant 210 et associe les signatures reçues aux données modifiées et non celles d'origine.

Dans le cas de données structurées, les modifications apportées peuvent être listées de façon aisée. On dispose ainsi, d'une part, du fichier original 2, et d'autre part, des modifications apportées.

Dans ce cas, lors de la transmission 17 de la signature à la station au sol 1, on ajoute, à la signature du fichier original envoyée, un fichier des modifications ainsi que la signature des modifications.

La station sol 1 reconstitue alors les données modifiées à l'aide du fichier original 2 récupéré dans la base de données 11 comme indiqué plus haut et du fichier de modifications reçu.

A tout dossier est associé l'identifiant 210 permettant la mise en oeuvre de l'invention. Ainsi, à toute création d'un nouveau dossier, l'auteur peut solliciter la station au sol 1 pour obtenir cet identifiant.

## Revendications

1. Procédé de communication comprenant une étape de réception (4) de données numériques (2) par au moins une entité distante (3ᵢ), une étape de signature numérique (6) desdites données reçues par ladite entité distante de sorte à générer une signature numérique (200) et une étape de transmission (17) de ladite signature numérique à une entité locale, **caractérisé en ce que** l'on transmet ladite signature numérique (200) avec au moins une information d'identification (210) desdites données reçues et signées (2), ladite information d'identification (210) étant de taille inférieure auxdites données reçues (2).

2. Procédé de communication selon la revendication 1, dans lequel l'étape de signature (6) pour calculer une signature numérique (200) comprend:
- la détermination d'une empreinte (202, 304) desdites données reçues (2) par ladite entité distante (3i),
- le calcul de données d'intégrité (218) de ladite empreinte (202, 304),
- le chiffrement de ladite empreinte et des données d'intégrité, à l'aide d'une clé de chiffrement (208).

3. Procédé de communication selon la revendication précédente, dans lequel ledit chiffrement est également effectué sur ladite au moins une information d'identification (210).

4. Procédé de communication selon l'une des revendications 1 et 2, dans lequel on juxtapose, à ladite signature numérique (200), ladite au moins une information d'identification (210) de sorte à former un fichier de données à transmettre à ladite entité locale (1).

5. Procédé de communication selon l'une des revendications précédentes, comprenant, préalablement à ladite réception des données numériques par l'entité distante:
- une première étape de signature des données numériques par ladite entité locale (1), et
- une étape de transmission (4), par l'entité locale à destination de l'entité distante (3ᵢ), des données (2) et de la première signature (304) ainsi générée,
ladite étape de signature (6) par l'entité distante (3ᵢ) étant réalisée sur ladite première signature (304) de sorte à former une double signature.

6. Procédé de communication selon l'une des revendications précédentes, dans lequel une pluralité d'entités distantes (3ᵢ) reçoit des données numériques (2), et chaque entité distante (3ᵢ) transmet une dite signature numérique (200) des données reçues accompagnée d'une dite information d'identification (210) des données reçues, et
ladite entité locale (1) stocke, dans une base de données (11), l'ensemble des signatures (200) de la pluralité d'entités distantes avec lesdites informations d'identification (210), et stocke une unique copie de chaque donnée numérique (2) de telle sorte que l'entité locale peut lier une signature reçue avec une copie détenue localement.

7. Procédé de communication selon la revendication précédente, dans lequel, à réception d'une signature numérique (200) accompagnée d'une information d'identification (210), l'entité locale (1) émet (12), à destination de l'entité distante émettrice (3ᵢ), une demande des données numériques identifiées dans ladite information d'identification et dont aucune copie n'est stockée dans ladite entité locale.

8. Système de communication comprenant des moyens de réception de données numériques sur un réseau de communication, des moyens de signature numérique desdites données reçues agencés pour générer une signature numérique et des moyens de transmission de ladite signature numérique sur ledit réseau de communication à destination d'une entité locale, **caractérisé en ce qu'**il est agencé pour transmettre ladite signature numérique avec au moins une information d'identification desdites données reçues et signées, ladite information d'identification étant de taille inférieure auxdites données reçues.

9. Aéronef comprenant un système de communication selon la revendication précédente.

10. Système aéroportuaire comprenant une pluralité d'aéronefs (3ᵢ) selon la revendication précédente et une station au sol (1), ladite station au sol étant apte à stocker une copie des données numériques (2) transmises auxdits aéronefs et comprenant:
- des moyens de réception d'une signature numérique et d'au moins une information d'identification émises par un desdits aéronefs,
- des moyens de recherche locale, à l'aide de l'information d'identification, d'une copie des données numériques transmises audit aéronef,
- des moyens de vérification, à l'aide de la copie trouvée, de ladite signature numérique reçue de l'aéronef.
